# EUROPEAN PATENT SPECIFICATION

(11) **EP 2 917 047 B1**
(45) Date of publication and mention of the grant of the patent: **05.06.2019**
(21) Application number: 13818380.1
(22) Date of filing: 14.10.2013
(51) Int. Cl.: B60C 11/16

(54) **METHOD FOR IMPROVING A STUDDED TYRE AND STUDDED TYRE OBTAINED ACCORDING TO SAID METHOD**
VERFAHREN ZUM VERBESSERN EINES SPIKEREIFENS UND SPIKEREIFEN ERSTELLT NACH DIESER METHODE
MÉTHODE POUR AMÉLIORER UN PNEU À CLOUS ET PNEU FABRIQUÉ EN ACCORD AVEC CETTE MÉTHODE

(30) Priority: 12.11.2012 IT PD20120339; 15.11.2012 US 201261726822 P; 06.02.2013 EP 13154217; 08.02.2013 US 201361762421 P
(43) Date of publication of application: 16.09.2015
(60) Divisional application: 19170379.2
(73) Proprietor: Pirelli Tyre S.p.A., 20126 Milano (IT)
(72) Inventor: TROMBIN, Andrea, I-20126 Milano (IT); LEENDERTSE, Jaap, I-20126 Milano (IT)
(74) Representative: Susanetto, Carlo
(86) International application number: PCT/IB2013/059339
(87) International publication number: WO 2014/072853

(56) References cited:
- EP-A1- 2 314 466
- EP-A1- 2 540 527
- US-A1- 2004 163 746

## Description

The present invention relates to a method for improving the performance of a studded tyre, in particular for increasing the durability thereof over time to ensure a more efficient retaining action of the studs in the tread band of the tyre.

The invention is moreover directed to a studded tyre produced according to this method and also to a stud for tyres which is configured specifically for use in this tyre.

A tyre generally comprises a carcass structure which is shaped toroidally about an axis of rotation and comprises at least one carcass ply having end strips which engage in respective annular anchoring structures.

In a position which is radially external to the carcass structure, provision is made of a belt structure comprising one or more belt layers, which are located so as to radially overlap with respect to one another and with respect to the carcass ply and which have textile or metallic reinforcing cords that are oriented crosswise and/or substantially parallel with respect to the direction of circumferential development of the tyre.

A tread band, which is made of elastomeric material and on which is defined a tread surface intended for contact with the road surface, is applied in a position which is radially external to the belt structure.

It is known that the grip of a tyre on an icy surface is made particularly difficult by the reduced coefficient of friction of the ice. To solve this problem, use is extensively made, particularly in countries with very severe wintry conditions, of tyres on the tread band of which there are conveniently fixed metallic elements, so-called "studs", which, by projecting by a suitable distance from the tread surface of the tyre, are able to cut into the icy surface, thereby affording a suitable grip action of the tyre even on this type of road surface.

In general, a stud is formed by a body housed inside a hole formed in the tread band of the tyre and by a pin extending from the body of the stud so as to project from the tread band outside the hole. In turn, the body of the stud comprises a base, housed in a radially internal position in the hole, and a head, housed in a radially external position in the hole from which the pin extends longitudinally.

The use of studded tyres, where permitted, is subjected to specific standards which stipulate the maximum number of studs, the positioning thereof inside the tread band, the maximum pressure to which they can be subjected and also the weight and the maximum dimensions of the studs.

A tyre is defined as "directional" when it is configured to have a preferential rolling direction, typically coinciding with the direction of rotation of the tyre when mounted on a forward-travelling vehicle.

Consequently, an "advancing direction" is identified on the tread surface of a directional tyre, tangential to the tread surface and directed in the preferential rolling direction of the tyre.

Unless indicated differently, the terms "front" and "rear", when referring to regions, surfaces or sides of an element of the tyre, such as a stud or a part thereof, are intended to refer to the region, surface or side of said element which is substantially perpendicular to the advancing direction and, respectively, points in the advancing direction and oppositely thereto.

Furthermore, said region, surface or side is considered to be "substantially perpendicular" to the advancing direction when the maximum deviation thereof from a plane perpendicular to the advancing direction (selected with reference to said region, surface or side) has a value which is less than or equal to 20% with respect to the greatest dimension of said region, surface or side that is projected on said perpendicular plane.

In this way, regions, surfaces or sides which are slightly curved or slightly inclined with respect to the plane perpendicular to the advancing direction are also considered to be substantially perpendicular to the advancing direction.

"Shape in plan view" of a stud or of an element thereof denotes the orthogonal projection of said stud or of said element thereof on a plane perpendicular to a longitudinal axis of said stud.

It is moreover specified that "trapezoidal" shape in plan view is intended to mean a shape in plan view which is generically similar to the geometrical shape of a trapezium, this definition also including simple variants of this shape, for example a trapezium with rounded vertices or with slightly curved sides or sides with sporadic discontinuities such as small protrusions or small recesses.

"Radial plane" is intended to denote any plane passing through the axis of rotation of the tyre.

It is finally specified that "radial surface" where referring to a portion of a stud is intended to mean a surface of this stud portion which extends substantially parallel to a radial direction of the tyre. In particular, this surface is considered to be substantially parallel to the radial direction when the maximum deviation thereof from a plane parallel to the radial direction (selected with reference to said surface) has a value of less than or equal to 20% with respect to the greatest dimension of said surface projected on said parallel plane. In this way, surfaces which are slightly inclined or slightly curved, in particular slightly concave or convex with respect to a plane parallel to a radial direction, are also considered to be substantially parallel to a radial direction.

US 8,113,250 describes a studded tyre, the studs of which can be configured with a base of various shapes, including quadrangular shapes, all of which are symmetrical with respect to a radial plane of the tyre passing through the longitudinal axis of the stud.

USD 550,611 and USD 551,614 disclose studs for tyres having a base shaped like a triangle.

US 2004/0163746 discloses a studs for tyre having a base and a head shaped like a triangle.

The applicant has firstly recognized that one of the most important factors which contribute to a deterioration of the performance of a studded tyre over time is the separation of one or more studs from the tread band.

The applicant has therefore observed that, during normal operation of a tyre on a road surface, the studs are subjected to high levels of stress which tend to remove them from the holes in which they are housed. In particular, the applicant has noticed how the possibility of the stud coming out from the tread band is much greater in studded tyres mounted on relatively heavy and powerful vehicles which are able to apply strong accelerations to the vehicle.

The applicant has therefore observed how the tangential stresses exerted on the pin of the stud cause an oscillatory movement of the stud inside the hole, which, in the worst case, may involve the immediate extraction of the stud, or, considering the difference in rigidity between the stud (highly rigid) and tread band (highly deformable), a relative movement of the body of the stud with respect to the walls which delimit the hole in which it is housed, with resulting friction between the stud and tread band.

Moreover, the applicant has observed how this friction action is more noticeable at the base of the stud, inasmuch as this is at the greatest longitudinal distance from the application of the tangential stress exerted on the pin, reducing the retaining action of the stud in the tread band and thus promoting the undesirable event whereby it comes out.

The applicant has therefore perceived that the efficiency of the retaining action of the studs in the tread band can be prolonged in time by more efficiently opposing the oscillations of the stud inside the hole in which it is housed. In particular, the applicant has perceived that this opposing action could advantageously be linked to the frequency and to the intensity of the stresses to which the different regions of contact between the stud and tread band are subjected, in such a way as to foresee respective abutment regions of differentiated geometry which make it possible to increase the retaining action of the stud inside the respective housing hole and, at the same time, to keep the overall volume and weight of the stud within the limits stipulated by the standards.

In the light of this intuition, the applicant has therefore verified that the greatest stresses to which a stud is subjected at its application point, that is at the pin, are those in a direction opposite to the advancing direction of the tyre.

The applicant has therefore found that it is possible to achieve an improvement in the retaining action of the stud inside the respective housing hole by configuring the stud in such a way that the base thereof has an enlarged front abutment region and a correspondingly reduced rear abutment region.

In particular, in a first aspect, the invention relates to a studded tyre according to claim 1.

In a second aspect, the invention relates to a stud for tyres according to claim 12. The applicant believes that the use of these features makes it possible to achieve a studded tyre with greater performance capabilities compared to known studded tyres, even utilizing studs which maintain volumetric and weight dimensions within the limits imposed by the applicable standards.

These features make it possible to achieve a further improvement in the action to counter the oscillation of the stud inside the respective hole as a result of tangential stresses applied on the pin in a direction opposite to the advancing direction.

The applicant thus believes that the stud oscillates inside the hole about an axis of oscillation positioned between the base and the head of the stud, in such a way that enlarging the rear abutment region between the head of the stud and the tread band is expedient for increasing the stresses in a direction opposite to the advancing direction.

The present invention, in at least one of the aforementioned aspects, can have at least one of the preferred features indicated hereinbelow.

In a first preferred embodiment, said front abutment region and rear abutment region extend predominantly along a dimension substantially perpendicular to an advancing direction of said tyre defined on said tread band at the position of said hole, and substantially parallel to a tread surface of said tyre.

In this way, it is possible to achieve efficient abutment actions between the stud and tread band without excessively increasing the radial dimension of the stud, thereby avoiding possible punctures in the tyre caused by the penetration of the stud into the tread band.

Preferably, provision is made to configure said base with a polygonal shape in plan view.

In a further preferred manner, provision is made to configure said base with a trapezoidal shape in plan view, on which are defined a front side, belonging to said front abutment region, forming a longer base of said trapezium, and a rear side, belonging to said rear abutment region, forming a shorter base of said trapezium. The applicant believes that this configuration realizes the need, in the most logical and most simple manner, to differentiate and control the abutment action between the stud and tread band at the front and rear abutment regions.

Moreover, this limits the ability of the stud to rotate about its longitudinal axis inside the hole in which it is housed, an occurrence which would involve a lower efficiency of the stud when gripping the icy road surface as well as a greater opportunity for the stud to come out from the tread band.

According to a preferred embodiment, said front abutment region is larger than said rear abutment region by a percentage in the range from about 20% to about 50%. Preferably, said front side of said base is larger than said rear side of said base by a percentage in the range from about 20% to about 50%.

In a further preferred manner, the measurement of said front side of said base is in the range from about 8 mm to about 11 mm.

Moreover, preferably, the measurement of said rear side of said base is in the range from about 5 mm to about 9 mm.

The applicant believes that these measurements of the base of the stud maximize the opposing requirements for countering the oscillation to which the stud is subjected on account of stresses directed oppositely to the advancing direction of the tyre (deriving from states of acceleration of the vehicle on which the tyre is mounted) and on account of stresses directed in the direction of the advancing direction of the tyre (deriving from states of braking of the vehicle on which the tyre is mounted).

With yet further preference, provision is made on said head of a front abutment region and a rear abutment region located opposite each other, thereby providing mutual abutment between said head and said tread band.

With yet further preference, provision is made for configuring said head asymmetrically with respect to said radial plane in such a way that said front abutment region of said head is smaller than said rear abutment region of said head.

Preferably, said head of said stud has a polygonal shape in plan view.

In a further preferred manner, said head of said stud has a trapezoidal shape in plan view, said front side of said head forming a shorter base of said trapezium, and said rear side of said head forming a longer base of said trapezium.

In this case, too, the applicant believes that this configuration represents the best shape for meeting the requirement for differentiating the abutment action between the stud and tread band at the front and rear abutment regions.

Moreover, it is preferable that said rear side of said head is larger than said front side of said head by a percentage in the range from about 20% to about 60%.

In a preferred embodiment, the measurement of said front side of said head is in the range from about 4 mm to about 7 mm.

Preferably, moreover, the measurement of said rear side of said head is in the range from about 6 mm to about 9 mm.

These features make it possible to achieve a good balance between the resistance to the oscillations to which the stud is subjected owing to acceleration operations of the vehicle on which the studded tyre is mounted and those to which the stud is subjected owing to braking operations of the vehicle on which the studded tyre is mounted.

In a preferred embodiment, provision is made to configure said head with a shape in plan view analogous to the shape in plan view of said base, this shape being rotated through 180° about the longitudinal axis of said stud relative to said base. This further limits the possibility for the stud to rotate about its longitudinal axis inside the hole in which it is housed.

Preferably, provision is made to configure said head with a shape in plan view having an area whose dimensions are reduced by a proportional factor in the range from about 1.2 to about 2.5 relative to the area of the shape in plan view of said base.

This provides a stud in which the shape in plan view of the head does not project from the shape in plan view of the base, in such a way that the maximum dimensions for the stud during the introduction of the stud into the corresponding hole are determined only by the dimensions of the base, without hindrance caused by the geometry of the head.

In a preferred embodiment of the invention, provision is made to increase the contact area between said tread band and said stud by configuring a head of said stud with at least one concave radial surface, the head being housed in said hole in a radially outer position relative to said base and linked to the base by a shank having a smaller cross section than said base, with a pin, located longitudinally opposite said base, extending from the head.

This further increases the retaining action of the stud inside the hole due to the tread band, which limits not only the oscillatory movement of the stud but also the possible translatory movement along the radial direction.

Preferably, said head has at least one concave radial surface.

Preferably, said at least one radial surface of said head has a concavity of a cylindrical type, having an axis spaced apart from and substantially perpendicular to said longitudinal axis of said stud and a substantially constant radius of curvature in the range from about 3 mm to about 17 mm.

In a further preferred manner, all the radial surfaces of said head which are in contact with said tread band are concave.

In a further preferred embodiment, provision is made to configure said pin with a shape in plan view on which is defined a front side of said pin, having a profile in the form of a broken line. Preferably, the profile in the form of a broken line defines at least two teeth. Preferably, the at least two teeth point in an advancing direction of said tyre.

On account of these features, the studded tyre is able to afford a better grip on an icy road surface during periods of acceleration, doing so also for vehicles with a high-performance engine in terms of power, for example sports cars. The adoption of such a configuration of the pin is advantageously made possible by the ability of the studded tyre obtained according to the invention to counter high tangential stresses firmly retaining the studs inside the corresponding holes.

Moreover, provision is preferably made to configure said pin with a shape in plan view on which is defined a rear side of said pin, located opposite said front side of said pin and having a substantially flat profile.

This makes it possible to achieve a high gripping capacity on the icy surface during a period of braking, since a flat surface can be opposed better during braking with respect to a surface with one or more points, since the points have a greater penetration capacity.

The features and the advantages of the invention will emerge more clearly from the detailed description of a preferred exemplary embodiment thereof, provided solely by way of a non-limiting example with reference to the accompanying drawings, in which:
- Figure 1 is a schematic perspective view of a studded tyre made in accordance with the method of the present invention;
- Figure 2 is a view, on an enlarged scale and in a partial section, of a portion of the studded tyre shown in Figure 1;
- Figures 3 to 6 are respectively a perspective side view, a plan view from above, an elevated front view and an elevated side view from the left of a stud of the studded tyre shown in Figure 1.

With reference to the attached figures, 1 denotes overall a studded tyre made in accordance with the method of the present invention.

The tyre 1 generically comprises a tread band 2, which is configured toroidally about an axis of rotation X of the tyre 1 and which is arranged in a radially outer position on a belt structure of the tyre 1, according to a configuration which is known per se in the technical field in question.

In turn, the belt structure is coupled in a radially outer position to a carcass structure, both of which are known per se and are not shown in the enclosed figures.

The tread band 2 is made of an elastomeric material and defines a radially outer tread surface 3, which is intended for contact between the tyre 1 and the road surface during its rolling motion about the axis X.

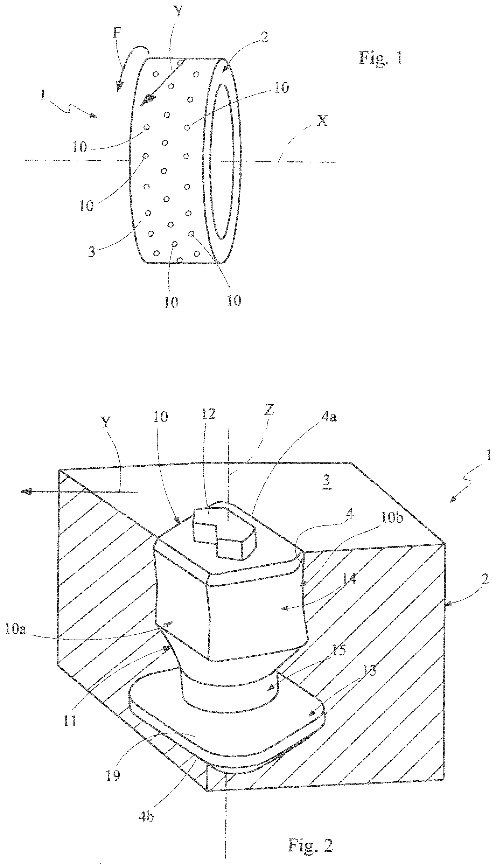

The tyre 1 is preferably of a directional type, and therefore a preferential rolling direction thereof is determined, denoted by F in Figure 1. In this way, an advancing direction Y is defined for each point of the tread surface 3, tangential to the tread surface 3 oriented in the rolling direction F.

A plurality of holes 4, which are identical to one another, are formed on the tread band 2, positioned in a suitable manner along the development of the tread surface 3.

Each hole 4, preferably being cylindrical, extends along a substantially radial direction and has an opening 4a at the tread surface 3 and a bottom 4b, which is closed, at the longitudinally opposite end.

Each hole 4 houses, by engagement, a corresponding stud 10, comprising a body 11, housed inside the hole 4 and extending along a longitudinal axis Z, and also a pin 12, which extends longitudinally from the body 11 to project from the tread surface 3 through the opening 4a to the outside of the hole 4.

Owing to the elasticity of the elastomeric material from which the tread band 2 is made, and to the main dimensions of the hole 4, the walls of the tread band 2 which delimit the hole 4 are in direct contact substantially with the entire surface of the body 11, but not the surface from which the pin 12 extends, and exert on the body 11 a retaining action of the stud 10 inside the hole 4.

A front surface 10a and an opposite rear surface 10b are identified on each stud 10, these being defined respectively as the surfaces of the stud which point in the advancing direction Y and in a direction opposite to the advancing direction Y. In other words, the front surface 10a and the rear surface 10b can be defined as the projections of the stud 10 on a radial plane R passing through the longitudinal axis Z realized along the advancing direction Y and along the opposite direction.

The body 11 of the stud 10 is preferably made of a metallic material, for example of steel, and comprises, at longitudinally opposite ends, a base 13 and a head 14, which are linked to one another by a shank 15 extending along the longitudinal axis Z and having a smaller cross section than the base 13 and the head 14.

The base 13 is housed in the hole 4 in a radially inner position, resting on the bottom 4b, whereas the head 14 is housed inside the hole 4 in a radially outer position, thus being substantially flush with the tread surface 3.

The pin 12 is made of a material having a high hardness and wear resistance, for example of tungsten carbide, and extends longitudinally from the head 14 so as to project from the hole 4 to the outside of the tread surface 3.

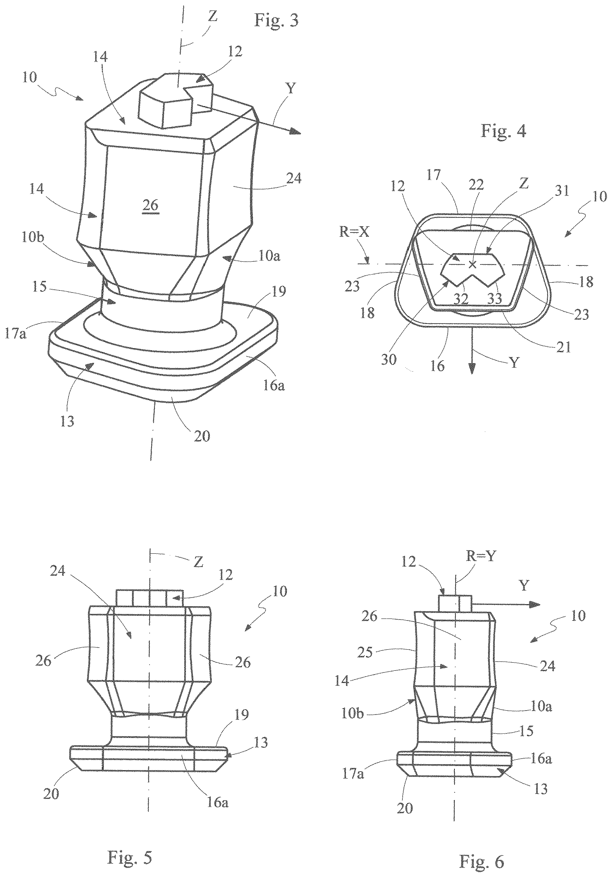

As can be seen more clearly in Figure 4, the base 13 has a trapezoidal shape in plan view, on which are defined a front side 16, belonging to the front surface 10a, and an opposite rear side 17, belonging to the rear surface 10b, said front and rear sides being substantially parallel to the axis of rotation X of the tyre 1 and substantially perpendicular to the advancing direction Y. The front side 16 and the rear side 17 are joined together by opposite side flanks 18.

The shape in plan view of the base 13 is preferably an isosceles trapezium with rounded vertices, in which the front side 16 of the base 13 represents the longer base of the trapezium, the rear side 17 of the base 13 represents the shorter base of the trapezium and the side flanks 18 represent the sides of the trapezium.

The front side 16 is therefore larger than the rear side 17 and has a measurement which is in the range from about 8 mm to about 11 mm, preferably of about 9.5 mm, whereas the rear side 17 has a measurement which is in the range from about 5 mm to about 9 mm, preferably of about 7 mm.

Preferably, the front side 16 is larger than the rear side 17 by a percentage in the range from about 20% to about 50%, preferably of about 35%.

The distance between the front side 16 and the rear side 17, which represents the height of the trapezium, is in the range from about 5 mm to about 9 mm, preferably about 7.5 mm.

Towards the head 14, the base 13 has a substantially flat surface 19, which is perpendicular to the longitudinal direction Z and is suitably joined to the shank 15, whereas, longitudinally opposite, it has a surface 20 which is tapered towards the bottom 4b of the hole 4, in such a way as to facilitate the insertion of the stud 10 into the hole 4 during production of the tyre 1.

The front side 16 and the rear side 17 of the configuration in plan view of the base 13 are defined respectively by a front edge 16a and by a rear edge 17a, belonging respectively to the front surface 10a and to the rear surface 10b. The front edge 16a and the rear edge 17a moreover define a front abutment region and a rear abutment region between the base 13 and the wall of the tread band 2 which delimits the hole 4.

The front abutment region and the rear abutment region of the base 13 are located oppositely with respect to the radial plane R of the tyre 1 passing through the longitudinal axis Z, and serve to counter the stresses on the pin 12 directed along the advancing direction Y or in the opposite direction, as explained above.

The front and rear edges 16a, 17a extend longitudinally by a measure which is constant and relatively reduced with respect to the dimension perpendicular to the longitudinal axis Z, such that the front and rear abutment regions of the base 13 extend for the most part along a dimension which is substantially perpendicular to the advancing direction Y and substantially parallel to the tread surface 3.

With regard to that explained above, the base 13 is clearly asymmetrical with respect to the radial plane R passing through the longitudinal axis Z.

The shank 15 has a substantially circular configuration in plan view with a diameter in the range from about 4 mm to about 5 mm, preferably of about 4.6 mm.

Analogously to the base 13, the head 14 has a trapezoidal shape in plan view, on which are defined a front side 21, belonging to the front surface 10a, and an opposite rear side 22, belonging to the rear surface 10b. The front side 21 and the rear side 22 are substantially parallel to the axis of rotation X of the tyre 1 and substantially perpendicular to the advancing direction Y and are joined to one another by opposite side flanks 23.

Contrary to the base 13, however, the head 14 has a shape in plan view which is rotated through 180° about the longitudinal axis Z with respect to that of the base 13.

It follows that the shape in plan view of the head 14 is preferably an isosceles trapezium with rounded vertices, in which the front side 21 of the head 14 represents the shorter base of the trapezium, the rear side 22 of the head 14 represents the longer base of the trapezium and the side flanks 23 represent the sides of the trapezium.

In the head 14, therefore, the front side 21 is smaller than the rear side 22 and has a measurement which is in the range from about 4 mm to about 7 mm, preferably of about 5.5 mm, whereas the rear side 17 has a measurement which is in the range from about 6 mm to about 9 mm, preferably of about 7.8 mm.

Preferably, the rear side 22 is larger than the front side 21 by a percentage in the range from about 20% to about 60%, preferably of about 40%.

In the head 14, the distance between the front side 21 and the rear side 22, which represents the height of the trapezium, is in the range from about 5 mm to about 9 mm, preferably about 5.5 mm.

The head 14 therefore has a shape in plan view having an area whose dimensions are reduced with respect to the area of the shape in plan view of the base 13, and in particular this area is reduced by a proportional factor in the range from 1.2 to 2.5, preferably of about 1.7.

The front side 21, the rear side 22 and the side flanks 23 of the configuration in plan view of the head 14 are defined respectively by a front radial surface 24, by a rear radial surface 25 and by opposite side radial surfaces 26, extending along the longitudinal axis Z by a measure which is in the range from about 3.5 mm to about 5.5 mm, preferably by about 4.5 mm.

The front, rear and side radial surfaces 24, 25 and 26 have a concavity of a cylindrical type, having an axis spaced apart from and substantially perpendicular to the longitudinal axis Z and a substantially constant radius of curvature in the range from about 3 mm to about 17 mm.

Preferably, the walls of the hole 4 which are in contact with the aforementioned radial surfaces 24, 25 and 26 have a convex profile, able to embrace the concave profile thereof.

Moreover, the front and rear radial surfaces 24 and 25, opposite one another with respect to the radial plane R and belonging respectively to the front surface 10a and to the rear surface 10b of the stud 10, respectively define a front abutment region and a rear abutment region between the head 14 and the wall of the tread band 2 delimiting the hole 4.

The pin 12 extends from the head 14 by a measure in the range from about 1 mm to about 1.5 mm, preferably by a measure of about 1.3 mm, and has a shape in plan view on which are defined a front side 30 and an opposite rear side 31, belonging respectively to the front surface 10a and to the rear surface 10b of the stud 10.

The front side 30 of the pin 12 has a profile in the form of a broken line defining two teeth 32 and 33. In the configurations shown in the figures, the teeth 32, 33 point in the advancing direction Y. Alternatively, in at least some of the studs 10 engaging in the holes 4 formed in the tread surface 3 of the tyre 1, the teeth 32, 33 can point in a direction which differs from the advancing direction Y, for example in a direction opposite to the advancing direction Y. The rear side 31 of the pin 12 has a substantially flat profile, perpendicular to the advancing direction Y.

The tyre 1 is produced proceeding from a carcass and belt structure which is known per se and on which is arranged a layer of elastomeric material, made up of a suitable mixture, forming the tread band 2. The holes 4 are preferably formed during the moulding step, in which the tread band 2 is vulcanized, by means of suitably shaped rods extending radially from the inner walls of the mould.

The studs 10, which are obtained by means of a separate process, are then inserted into the holes 4 by means of a semiautomatic machine, which in itself is conventional, in such a way that the base 13 is housed in the hole 4 resting on the bottom 4b and the pin 12 projects from the opening 4a of the hole 4.

Moreover, the studs 10 are inserted into the hole 4 with a predefined orientation, in such a way that the front surface 10a, in particular the front side 16 of the base 13, the front side 21 of the head 14 and the front side 30 of the pin 12, all point in the advancing direction Y, whereas the rear surface 10b, in particular the rear side 17 of the base 13, the rear side 22 of the head 14 and the rear side 31 of the pin 12, all point oppositely to the advancing direction Y.

In an alternative configuration, a first plurality of studs 10 are inserted into the respective holes 4 with the predefined orientation described above. A second plurality of studs 10 can instead be inserted into the respective holes 4 with a different orientation. By way of example, the insertion into the holes 4 may be effected in such a manner that the front surface 10a, in particular the front side 16 of the base 13, the front side 21 of the head 14 and the front side 30 of the pin 12 of the studs 10 of the second plurality, point oppositely to the advancing direction Y, whereas the rear surface 10b, in particular the rear side 17 of the base 13, the rear side 22 of the head 14 and the rear side 31 of the pin 12 of the studs 10 of the second plurality, all point in the advancing direction Y.

Clearly, further modifications and variations may be made by a person skilled in the art to the invention described above to fulfil any specifications and possible requirements, variants and modifications which are nevertheless within the scope of protection as defined by the claims which follow.

The tyre 1 is mounted on a vehicle in such a way that, during forward travel of the vehicle, it rotates about the axis of rotation X in the preferential rolling direction F.

During an acceleration/deceleration step (including a braking step) of the vehicle, and also when cornering and/or generally in the case of lateral stress, the pin 12 meets the road surface, cutting the potential icy surface and causing tangential stress on the stud 10.

This stress, applied to a longitudinal end of the stud 10, can be equated to a force acting on the centre of gravity of the stud 10 combined with a pair of forces that tends to make the stud 10 oscillate about an axis of oscillation passing through its centre of gravity and substantially perpendicular to the longitudinal axis Z. In particular, in the case of traction/braking and therefore in the case of purely longitudinal forces, the axis of oscillation will be parallel with the axis of rotation X, whereas, in the case of purely lateral forces, the axis of oscillation will be parallel with the advancing direction Y. In the most common case, there will be a combination of lateral forces and longitudinal forces, and the axis of oscillation will thus have an assigned inclination with respect to the axis of rotation X and to the direction Y.

This pair of forces, which would tend to make the stud 10 oscillate inside the hole 4, is sufficiently opposed by the front abutment region of the base 13 (formed by the front edge 16a thereof) and by the rear abutment region of the head 14 (formed by the rear radial surface 25 thereof), which, owing to the method of the present invention, are particularly extensive. Moreover, it is also sufficiently opposed by the rear abutment region of the base 13 (formed by the rear edge 17a thereof) and by the front abutment region of the head 14 (formed by the front radial surface 24 thereof).

In this way, the oscillatory movement of the stud is greatly reduced, so that it can be supported by the wall of the hole 4, thereby utilizing the deformability characteristics of the elastomeric material of the tread band 2, and thus preventing the reciprocal movement between the stud 10 and the wall of the hole 4, which, over time, could give rise to progressive wear of the latter.

The large extent of the rear radial surface 25 of the stud 10, both in terms of longitudinal dimensions and in terms of dimensions of the rear side 22, makes it possible moreover to counter the force acting on the centre of gravity of the stud 10 yet more efficiently. The force acting on the centre of gravity of the stud 10 is also countered by the front radial surface 24 of the stud 10.

### Examples

The applicant has carried out a series of tests relating to behaviour on snow using a VW Golf automobile equipped with tyres measuring 205/55 R16, comprising conventional studs (with a symmetrical base and head and a hexagonal pin), as well as with tyres of the same measurement comprising studs according to the present invention.

In particular, tests were carried out on tyres in which the studs according to the present invention were inserted into the holes formed on the surface of the tread band in different configurations.

In a first configuration (layout 1), the studs were inserted in such a way that the teeth of the pin pointed in the advancing direction of the tyre in all the portions of the tread.

In a second configuration (layout 2), the studs were inserted in such a way that the teeth of the pin pointed in the advancing direction of the tyre in the central portion of the tread, and in a direction opposite to the advancing direction of the tyre in the side portions of the tread.

In a third configuration (layout 3), the studs were inserted in such a way that the teeth of the pin pointed in a direction opposite to the advancing direction of the tyre in the central portion of the tread, and in the advancing direction of the tyre in the side portions of the tread.

In a fourth configuration (layout 4), the studs were inserted in such a way that the teeth of the pin pointed in a direction opposite to the advancing direction of the tyre in all the portions of the tread.

Table 1 below summarizes the results of a traction and braking test (carried out with an instrumented automobile) on an icy surface, taking as a reference the performance of tyres equipped with conventional studs. For the test, the starting traction from a standstill and the braking distance from a speed of 50 km/h down to 0 km/h were measured.

**Table 1**

| | Traction | Braking |
|---|---|---|
| Comparison: symmetrical stud with hexagonal pin | 100 | 100 |
| Invention: Layout 1 | 103 | 113 |
| Invention: Layout 2 | 111 | 114 |
| Invention: Layout 3 | 107 | 119 |
| Invention: Layout 4 | 107 | 121 |

Table 2 below summarizes the results of the tests in terms of subjective behaviour evaluated (with respect to different items) by a professional test driver on an icy surface.

**Table 2**

| | Comparison | Layout 1 | Layout 2 | Layout 3 | Layout 4 |
|---|---|---|---|---|---|
| Traction | 6 | 7 | 7 | 6.5 | 6.5 |
| Braking efficiency | 6 | 7 | 7 | 6.5 | 6.5 |
| Skid effect | 6 | 7 | 7 | 6.5 | 6.5 |
| Steerability | 6 | 7 | 7 | 6.5 | 6 |
| Understeering | 6 | 7 | 7 | 6.5 | 6 |
| Oversteering | 6 | 6 | 7 | 6 | 6 |
| Progression of loss of grip | 6 | 6.5 | 7 | 6 | 6 |
| Recovery | 6 | 6 | 6.5 | 6 | 6 |
| Lateral grip | 6 | 6 | 7 | 6 | 6 |

Table 3 below summarizes the results of the tests in terms of subjective behaviour evaluated (with respect to different items) by a professional test driver on a snow-clad surface.

**Table 3**

| | Comparison | Layout 1 | Layout 2 | Layout 3 | Layout 4 |
|---|---|---|---|---|---|
| Traction | 6.5 | 7.5 | 7.5 | 7 | 7 |
| Braking efficiency | 7 | 7.5 | 7.5 | 7 | 7 |
| Steerability | 6.5 | 7 | 7 | 6.5 | 6.5 |
| Understeering | 6.5 | 7 | 7.5 | 7 | 6.5 |
| Oversteering | 6.5 | 6.5 | 7 | 6.5 | 6.5 |
| Progression of loss of grip | 6.5 | 7 | 7 | 7 | 6.5 |
| Recovery | 6 | 6.5 | 7 | 6.5 | 6.5 |
| Lateral grip | 6 | 7 | 7 | 6.5 | 6.5 |

## Claims

1. Studded tyre (1) comprising:
- a tread band (2) on which a tread surface (3) of said tyre is defined,
- a plurality of holes (4) formed in said tread band (2) and opening on said tread surface (3), in which a corresponding plurality of studs (10) are housed by engagement, each stud comprising a body (11) housed in one of said holes and extending along a longitudinal axis (Z), and also comprising a pin (12) extending longitudinally from said body so as to project from said tread band (2) outside said hole (4),
in which said body (11) comprises a base (13), longitudinally opposed to said pin and housed in a radially internal position in said hole (4), and having a shape in plan view on which are defined a front side (16) and an opposite rear side (17), which are substantially parallel to an axis of rotation (X) of said tyre and substantially perpendicular to an advancing direction (Y) of said tyre defined on said tread band at the position of said hole, said front side (16) of said base being larger than said rear side (17) of said base, wherein said pin (12) extends longitudinally from a head (14) of said body (11), said head being housed in said hole (4) in a radially outer position relative to said base (13) of said stud and being linked to the base by a shank (15) having a smaller cross section than said base (13) and said head (14), said head having a shape in plan view on which are defined a front side (21) and an opposite rear side (22), which are substantially parallel to said axis of rotation (X) and substantially perpendicular to said advancing direction (Y), said front side (21) of said head (14) being smaller than said rear side (22) of said head (14)

2. Tyre according to Claim 1, in which said base (13) of said stud has a trapezoidal shape in plan view, said front side (16) of said base (13) of the stud forming a longer base of said trapezium, and said rear side (17) of said base (13) of the stud forming a shorter base of said trapezium.

3. Tyre according to any of the preceding claims, in which said front side (16) of said base is larger than said rear side (17) of said base by a percentage in the range from about 20% to about 50%.

4. Tyre according to any of the preceding claims, in which the measurement of said front side (16) of said base (13) is in the range from about 8 mm to about 11 mm and the measurement of said rear side (16) of said base (13) is in the range from about 5 mm to about 9 mm.

5. Tyre according to any of the preceding claims, in which said head (14) of said stud has a trapezoidal shape in plan view, said front side (21) of said head forming a shorter base of said trapezium, and said rear side (22) of said head forming a longer base of said trapezium.

6. Tyre according to any of the preceding claims, in which said rear side (22) of said head (14) is larger than said front side (21) of said head (14) by a percentage in the range from about 20% to about 60%.

7. Tyre according to any of the preceding claims, in which the measurement of said front side (21) of said head is in the range from about 4 mm to about 7 mm and the measurement of said rear side (22) of said head is in the range from about 6 mm to about 9 mm.

8. Tyre according to any of the preceding claims, in which said head (14) has a shape in plan view analogous to that of said base (13) and is rotated by 180° about the longitudinal axis (Z) of said stud relative to the shape of said base (13).

9. Tyre according to any of the preceding claims, in which said head (14) has a shape in plan view having an area whose dimensions are reduced by a proportional factor in the range from about 1.2 to about 2.5 relative to the area of the shape in plan view of said base (13).

10. Tyre according to any of the preceding claims, in which said head (14) has at least one concave radial surface (24, 25, 26) in contact with said tread band (2) and said at least one radial surface (24, 25, 26) of said head (14) has a concavity of a cylindrical type, having an axis spaced apart from and substantially perpendicular to said longitudinal axis (Z) of said stud and a substantially constant radius of curvature in the range from about 3 mm to about 17 mm.

11. Tyre according to claim 10, in which all the radial surfaces (24, 25, 26) of said head (14) which are in contact with said tread band (2) are concave.

12. Stud (10) comprising a body (11) extending along a longitudinal axis (Z), and also comprising a pin (12) extending longitudinally from said body, in which said body (11) comprises a base (13) located longitudinally opposite said pin (12) and having a shape in plan view on which are defined a front side (16) and an opposite rear side (17), which are substantially parallel to each other and which belong, respectively, to a front surface (10a) and to a rear surface (10b) defined on said stud, said front side (16) of said base (13) being larger than said rear side (17) of said base, wherein said pin (12) extends longitudinally from a head (14) of said body (11), said head being linked to said base (13) by a shank (15) having a smaller cross section than said base (13) and said head (14), said head having a shape in plan view in which are defined a front side (21) and an opposite rear side (22), which are substantially parallel to each other and which belong, respectively, to said front surface (10a) and to said rear surface (10b) defined on said stud, said front side (21) of said head (14) being smaller than said rear side (22) of said head (14)

13. Stud according to Claim 12, in which said base (13) of said stud has a trapezoidal shape in plan view, said front side (16) of said base (13) of the stud forming a longer base of said trapezium, and said rear side (17) of said base (13) of the stud forming a shorter base of said trapezium.

14. Stud according to any of Claims 12 or 13, in which said front side (16) of said base is larger than said rear side (17) of said base by a percentage in the range from about 20% to about 50%.

15. Stud according to any of Claims 12 to 14, in which the measurement of said front side (16) of said base is in the range from about 8 mm to about 11 mm and the measurement of said rear side (17) of said base is in the range from about 5 mm to about 9 mm.

## Patentansprüche

1. Spikereifen (1) umfassend:
- einen Laufflächenring (2), an dem eine Lauffläche (3) des Reifens definiert ist,
- eine Vielzahl von Löchern (4), die in dem Laufflächenring (2) ausgebildet sind und sich zu der Lauffläche (3) öffnen und in welchen eine entsprechende Vielzahl von Spikes (10) in Eingriff untergebracht ist, wobei jeder Spike einen Körper (11) umfasst, der in einem der Löcher aufgenommen ist und sich entlang einer Längsachse (Z) erstreckt, und auch einen Stift (12) umfasst, der sich der Länge nach von dem Körper weg erstreckt, um von dem Laufflächenring (2) außerhalb des Lochs (4) wegzuragen,
wobei der Körper (11) eine Basis (13) umfasst, welche der Länge nach dem Stift gegenüberliegt und in einer radial inneren Position in dem Loch (4) aufgenommen ist und in Draufsicht eine Gestalt aufweist, bei welcher eine Vorderseite (16) und eine gegenüberliegende Rückseite (17) definiert sind, die im Wesentlichen parallel zu einer Drehachse (X) des Reifens und im Wesentlichen senkrecht auf eine Vorschubrichtung (Y) des Reifens sind, die an dem Laufflächenring an der Position des Loches definiert ist, wobei die Vorderseite (16) der Basis größer ist als die Rückseite (17) der Basis, wobei der Stift (12) sich der Länge nach von einem Kopf (14) des Körpers (11) weg erstreckt, wobei der Kopf in dem Loch (4) in einer radial äußeren Position in Bezug auf die Basis (13) des Spikes untergebracht ist und mit der Basis durch einen Schaft (15) mit einem geringeren Querschnitt als die Basis (13) und der Kopf (14) verbunden ist, wobei der Kopf in Draufsicht eine Gestalt aufweist, bei welcher eine Vorderseite (21) und eine gegenüberliegende Rückseite (22) definiert sind, die im Wesentlichen parallel zu der Drehachse (X) des Reifens und im Wesentlichen senkrecht auf die Vorschubrichtung (Y) des Reifens sind, wobei die Vorderseite (21) des Kopfes (14) größer als die Rückseite (22) des Kopfes (14) ist.

2. Reifen nach Anspruch 1, wobei die Basis (13) des Spikes in Draufsicht eine trapezförmige Gestalt aufweist, wobei die Vorderseite (16) der Basis (13) des Spikes eine längere Basis des Trapezes bildet, und die Rückseite (17) der Basis (13) der Basis eine kürzere Basis des Trapezes bildet.

3. Reifen nach einem der vorhergehenden Ansprüche, wobei die Vorderseite (16) der Basis um einen Prozentsatz in dem Bereich von etwa 20 % bis etwa 50 % größer ist als die Rückseite (17) der Basis.

4. Reifen nach einem der vorhergehenden Ansprüche, wobei das Maß der Vorderseite (16) der Basis (13) in dem Bereich von etwa 8 mm bis etwa 11 mm liegt, und das Maß der Rückseite (16) der Basis (13) in dem Bereich von etwa 5 mm bis etwa 9 mm liegt.

5. Reifen nach einem der vorhergehenden Ansprüche, wobei der Kopf (14) des Spikes in Draufsicht eine trapezförmige Gestalt aufweist, wobei die Vorderseite (21) des Kopfes eine kürzere Basis des Trapezes bildet, und die Rückseite (22) des Kopfes eine längere Basis des Trapezes bildet.

6. Reifen nach einem der vorhergehenden Ansprüche, wobei die Rückseite (22) des Kopfes (14) um einen Prozentsatz in dem Bereich von etwa 20 % bis etwa 60 % größer ist als die Vorderseite (21) des Kopfes (14).

7. Reifen nach einem der vorhergehenden Ansprüche, wobei das Maß der Vorderseite (21) des Kopfes in dem Bereich von etwa 4 mm bis etwa 7 mm liegt, und das Maß der Rückseite (22) des Kopfes in dem Bereich von etwa 6 mm bis etwa 9 mm liegt.

8. Reifen nach einem der vorhergehenden Ansprüche, wobei der Kopf (14) in Draufsicht eine Gestalt analog zu jener der Basis (13) aufweist und um die Längsachse (Z) des Spikes relativ zu der Gestalt der Basis (13) um 180° gedreht ist.

9. Reifen nach einem der vorhergehenden Ansprüche, wobei der Kopf (14) in Draufsicht eine Gestalt aufweist, die eine Fläche hat, deren Dimensionen um einen proportionalen Faktor in dem Bereich von etwa 1,2 bis etwa 2,5 relativ zu der Fläche, die die Gestalt der Basis (13) in Draufsicht aufweist, reduziert ist.

10. Reifen nach einem der vorhergehenden Ansprüche, wobei der Kopf (14) zumindest eine konkave radiale Oberfläche (24, 25, 26) in Kontakt mit dem Laufflächenring (2) aufweist, und die zumindest eine radiale Oberfläche (24, 25, 26) des Kopfes (14) eine Konkavität eines zylindrischen Typs aufweist, mit einer Achse, die von der Längsachse (Z) des Spikes beabstandet ist und im Wesentlichen senkrecht darauf steht, und einen Wesentlichen konstanten Krümmungsradius in dem Bereich von etwa 3 mm bis etwa 17 mm aufweist.

11. Reifen nach Anspruch 10, wobei alle radialen Oberflächen (24, 25, 26) des Kopfes (14) in Kontakt mit dem Laufflächenring (2) konkav sind.

12. Spike (10) umfassend einen Körper (11), der sich entlang einer Längsachse (Z) erstreckt, und auch umfassend einen Stift (12), der sich der Länge nach von dem Körper weg erstreckt, wobei der Körper (11) eine Basis (13) aufweist, die sich dem Stift (12) entgegengesetzt befindet und in Draufsicht eine Gestalt aufweist, bei welcher eine Vorderseite (16) und eine gegenüberliegende Rückseite (17) definiert sind, die im Wesentlichen parallel zueinander sind und die jeweils zu einer vorderen Oberfläche (10a) und zu einer hinteren Oberfläche (10b) gehören, die an dem Spike definiert sind, wobei die Vorderseite (16) der Basis (13) größer als die Rückseite (17) der Basis ist, wobei der Stift (12) sich der Länge nach von einem Kopf (14) des Körpers (11) weg erstreckt, wobei der Kopf mit der Basis (13) durch einen Schaft (15) mit einem geringeren Querschnitt als die Basis (13) und der Kopf (14) verbunden ist, wobei der Kopf in Draufsicht eine Gestalt aufweist, bei der eine Vorderseite (21) und eine gegenüberliegende Rückseite (22) definiert sind, die im Wesentlichen parallel zueinander sind und die jeweils zu der vorderen Oberfläche (10a) und zu der hinteren Oberfläche (10b) gehören, die an dem Spike definiert sind, wobei die Vorderseite (21) des Kopfes (14) kleiner als die Rückseite (22) des Kopfes (14) ist.

13. Spike nach Anspruch 12, wobei die Basis (13) des Spikes in Draufsicht eine trapezförmige Gestalt aufweist, wobei die Vorderseite (16) der Basis (13) des Spikes eine längere Basis des Trapezes bildet, und die Rückseite (17) der Basis (13) des Spikes eine kürzere Basis des Trapezes bildet.

14. Spike nach einem der Ansprüche 12 oder 13, wobei die Vorderseite (16) der Basis um einen Prozentsatz in dem Bereich von etwa 20 % bis etwa 50 % größer ist als die Rückseite (17) der Basis.

15. Spike nach einem der Ansprüche 12 bis 14, wobei das Maß der Vorderseite (16) der Basis in dem Bereich von etwa 8 mm bis etwa 11 mm liegt, und das Maß der Rückseite (17) der Basis in dem Bereich von etwa 5 mm bis etwa 9 mm liegt.

## Revendications

1. Pneu à crampons (1) comprenant :
- une bande de roulement (2) sur laquelle une surface de bande de roulement (3) dudit pneu est définie,
- une pluralité de trous (4) formés dans ladite bande de roulement (2) et s'ouvrant sur ladite surface de bande de roulement (3), où une pluralité correspondante de crampons (10) sont logés par engagement, chaque crampon comprenant un corps (11) logé dans l'un desdits trous et s'étendant le long d'un axe longitudinal (Z), et comprenant également une broche (12) s'étendant longitudinalement depuis ledit corps de manière à faire saillie depuis ladite bande de roulement (2) à l'extérieur dudit trou (4),
dans lequel ledit corps (11) comprend une base (13), longitudinalement opposée à ladite broche et logée dans une position radialement interne dans ledit trou (4), et ayant une forme en vue en plan sur laquelle sont définis un côté avant (16) et un côté arrière opposé (17), qui sont essentiellement parallèles à un axe de rotation (X) dudit pneu et essentiellement perpendiculaires à une direction d'avancement (Y) dudit pneu définie sur ladite bande de roulement à la position dudit trou, ledit le côté avant (16) de ladite base étant plus grand que ledit côté arrière (17) de ladite base, où ladite broche (12) s'étend longitudinalement depuis une tête (14) dudit corps (11), ladite tête étant logée dans ledit trou (4) dans une position radialement extérieure par rapport à ladite base (13) dudit crampon et étant reliée à la base par une tige (15) ayant une section transversale plus petite que ladite base (13) et ladite tête (14), ladite tête ayant une forme en vue en plan sur laquelle sont définis un côté avant (21) et un côté arrière opposé (22), qui sont essentiellement parallèles audit axe de rotation (X) et essentiellement perpendiculaires à ladite direction d'avancement (Y), ledit côté avant (21) de ladite tête (14) étant plus petit que ledit côté arrière (22) de ladite tête (14).

2. Pneu selon la revendication 1, dans lequel ladite base (13) dudit crampon a une forme trapézoïdale en vue en plan, ledit côté avant (16) de ladite base (13) du crampon formant une base plus longue dudit trapèze, et ledit côté arrière (17) de ladite base (13) du crampon formant une base plus courte dudit trapèze.

3. Pneu selon l'une des revendications précédentes, dans lequel ledit côté avant (16) de ladite base est plus grand que ledit côté arrière (17) de ladite base d'un pourcentage compris entre environ 20% et environ 50%.

4. Pneu selon l'une des revendications précédentes, dans lequel la mesure dudit côté avant (16) de ladite base (13) est comprise entre environ 8 mm et environ 11 mm et la mesure dudit côté arrière (16) de ladite base (13) est comprise entre environ 5 mm et environ 9 mm.

5. Pneu selon l'une des revendications précédentes, dans lequel ladite tête (14) dudit crampon a une forme trapézoïdale en vue en plan, ledit côté avant (21) de ladite tête formant une base plus courte dudit trapèze, et ledit côté arrière (22) de ladite tête formant une base plus longue dudit trapèze.

6. Pneu selon l'une des revendications précédentes, dans lequel ledit côté arrière (22) de ladite tête (14) est plus grand que ledit côté avant (21) de ladite tête (14) d'un pourcentage compris entre environ 20% et environ 60%.

7. Pneu selon l'une des revendications précédentes, dans lequel la mesure dudit côté avant (21) de ladite tête est comprise entre environ 4 mm et environ 7 mm et la mesure dudit côté arrière (22) de ladite tête est comprise entre environ 6 mm et environ 9 mm.

8. Pneu selon l'une des revendications précédentes, dans lequel ladite tête (14) a une forme en vue en plan analogue à celle de ladite base (13) et est tournée de 180° autour de l'axe longitudinal (Z) dudit crampon par rapport à la forme de ladite base (13).

9. Pneu selon l'une des revendications précédentes, dans lequel ladite tête (14) a une forme en vue en plan ayant une surface dont les dimensions sont réduites d'un facteur proportionnel compris entre environ 1,2 et environ 2,5 par rapport à la surface de la forme en vue en plan de ladite base (13).

10. Pneu selon l'une des revendications précédentes, dans lequel ladite tête (14) a au moins une surface radiale concave (24, 25, 26) en contact avec ladite bande de roulement (2) et ladite au moins une surface radiale (24, 25, 26) de ladite tête (14) a une concavité de type cylindrique, ayant un axe espacé dudit axe longitudinal (Z) dudit crampon et essentiellement perpendiculaire à celui-ci et un rayon de courbure essentiellement constant compris entre environ 3 mm et environ 17 mm.

11. Pneu selon la revendication 10, dans lequel toutes les surfaces radiales (24, 25, 26) de ladite tête (14) qui sont en contact avec ladite bande de roulement (2) sont concaves.

12. Crampon (10) comprenant un corps (11) s'étendant le long d'un axe longitudinal (Z), et comprenant également une broche (12) s'étendant longitudinalement depuis ledit corps, où ledit corps (11) comprend une base (13) située longitudinalement de manière opposée à ladite broche (12) et ayant une forme en vue en plan sur laquelle sont définis un côté avant (16) et un côté arrière opposé (17), qui sont essentiellement parallèles l'un à l'autre et qui appartiennent, respectivement, à une surface avant (10a) et à une surface arrière (10b) définies sur ledit crampon, ledit côté avant (16) de ladite base (13) étant plus grand que ledit côté arrière (17) de ladite base, où ladite broche (12) s'étend longitudinalement depuis une tête (14) dudit corps (11), ladite tête étant reliée à ladite base (13) par une tige (15) ayant une section transversale plus petite que ladite base (13) et ladite tête (14), ladite tête ayant une forme en vue en plan dans laquelle sont définis un côté avant (21) et un côté arrière opposé (22), qui sont essentiellement parallèles l'un à l'autre et qui appartiennent, respectivement, à ladite surface avant (10a) et à ladite surface arrière (10b) définies sur ledit crampon, ledit côté avant (21) de ladite tête (14) étant plus petit que ledit côté arrière (22) de ladite tête (14).

13. Crampon selon la revendication 12, dans lequel ladite base (13) dudit crampon a une forme trapézoïdale en vue en plan, ledit côté avant (16) de ladite base (13) du crampon formant une base plus longue dudit trapèze, et ledit côté arrière (17) de ladite base (13) du crampon formant une base plus courte dudit trapèze.

14. Crampon selon l'une des revendications 12 ou 13, dans lequel ledit côté avant (16) de ladite base est plus grand que ledit côté arrière (17) de ladite base d'un pourcentage compris entre environ 20% et environ 50%.

15. Crampon selon l'une des revendications 12 à 14, dans lequel la mesure dudit côté avant (16) de ladite base est comprise entre environ 8 mm et environ 11 mm et la mesure dudit côté arrière (17) de ladite base est comprise entre environ 5 mm et environ 9 mm.
